# EUROPEAN PATENT SPECIFICATION

(11) **EP 1 958 996 B1**
(45) Date of publication and mention of the grant of the patent: **17.03.2010**
(21) Application number: 06834329.2
(22) Date of filing: 08.12.2006
(51) Int. Cl.: C09J 111/02, C09J 11/06, C08L 11/00, C08L 11/02

(54) **ADHESIVE COMPOSITION AND ADHESIVE USING SAME**
ADHÄSIVE KOMPOSITION UND DAVON GEBRAUCH MACHENDER KLEBSTOFF
COMPOSITION ADHESIVE ET ADHESIF L'UTILISANT

(30) Priority: 09.12.2005 JP 2005355588; 18.08.2006 JP 2006223045
(43) Date of publication of application: 20.08.2008
(73) Proprietor: DENKI KAGAKU KOGYO KABUSHIKI KAISHA, Tokyo 103-8338 (JP)
(72) Inventor: WATANABE, Kosuke, Itoigawa-shi, Niigata 949-0393 (JP); MOCHIZUKI, Kenji, Itoigawa-shi, Niigata 949-0393 (JP)
(74) Representative: Hartz, Nikolai
(86) International application number: PCT/JP2006/324574
(87) International publication number: WO 2007/066765

(56) References cited:
- WO-A-01/10968
- CN-A- 1 827 723
- JP-A- 4 209 620
- JP-A- 04 209 620
- JP-A- 2000 219 859
- JP-A- 2001 031 934
- JP-A- 2004 059 895
- JP-A- 2004 059 895
- JP-A- 2004 197 028

## Description

### TECHNICAL FIELD

The present invention relates to an aqueous adhesive composition which is made solvent-free, and an adhesive using it.

### BACKGROUND ART

A solvent-type adhesive composition and adhesive using a chloroprene latex have been used in various applications, due to the adaptability to a wide range of adherends and the good balance of adhesion characteristics. However, from the viewpoint of the environmental influence, a demand for solvent-free has been increasing year after year, whereby development of an aqueous adhesive composition and adhesive is demanded. Some proposals have been made for the aqueous adhesive composition and adhesive, but such techniques have various problems to be solved, as compared with the solvent-type adhesive composition and adhesive (Non-patent Document 1)

As a means to improve performance of an aqueous adhesive composition and adhesive using a chloroprene latex, a method is known wherein a pH adjusting agent is added to destabilize a latex and thereby to develop the initial strength in a wet state (Non-patent Document 2, Patent Document 1 and Patent Document 2).

Non-patent Document 1: Secchaku no Gijutsu Vol. 23, No. 4 (2004) Total Vol. 73 (p. 24; item 4.5)

Non-patent Document 2: Secchaku no Gijutsu Vol. 21, No. 4 (2002) Total Vol. 65 (p. 35; item 2.5.5.2)
Patent Document 1: JP-A-2001-19922
Patent Document 2: JP-A-2004-43666

### DISCLOSURE OF THE INVENTION

### OBJECT TO BE ACCOMPLISHED BY THE INVENTION

The present invention has an object to provide an aqueous adhesive composition which exhibits sufficient initial strength even in a wet state right after application, and which provides a coating film having sufficient flame retardancy after it is dried, and an adhesive using it.

### MEANS TO ACCOMPLISH THE OBJECT

The present inventors have conducted extensive studies on the above problems, and as a result, they have found that the adhesive composition of the present invention and the adhesive using it, are effective for solving such problems. The present invention has been accomplished on the basis of this discovery.

The present invention provides the following.
(1) An adhesive composition comprising a chloroprene latex (A), an aromatic phosphate ester type plasticizer (B), and a pH adjusting agent (C).
(2) The adhesive composition according to the above (1), wherein (A) is one which is emulsion-polymerized in the presence of a rosin acid.
(3) The adhesive composition according to the above (1) or (2), wherein (B) is tricresyl phosphate.
(4) The adhesive composition according to the above (1) or (2), wherein (B) is cresyl diphenyl phosphate.
(5) The adhesive composition according to any one of the above (1) to (4), wherein (C) is glycine.
(6) The adhesive composition according to any one of the above (1) to (5), which further contains a halogenated alkyl phosphate ester plasticizer (D) in an amount of at most 50 mass%, based on the total mass of plasticizers to be added.
(7) The adhesive composition according to the above (6), wherein (D) is tris(chloropropyl) phosphate.
(8) The adhesive composition according to the above (6), wherein (D) is tris(dichloropropyl) phosphate.
(9) The adhesive composition according to any one of the above (1) to (8), which contains from 3 to 18 parts by mass of (B), and from 1 to 20 parts by mass of (C), per 100 parts by mass of the solid content of (A).
(10) An adhesive which is characterized by using the adhesive composition as defined in any one of the above (1) to (9).

### EFFECT OF THE INVENTION

The adhesive using the adhesive composition of the present invention, exhibits sufficient initial strength even in a wet state right after application, and provides a coating film having sufficient flame retardancy even after it is dried. The adhesive of the present invention is preferably used as an adhesive for a polyurethane foam material, particularly preferably used as a spray-type adhesive.

### BEST MODE FOR CARRYING OUT THE INVENTION

Now, the present invention will be described in detail.

The chloroprene latex (A) in the adhesive composition of the present invention is an emulsion wherein a chloroprene polymer is emulsified or dispersed in water by an emulsifier or a dispersant.

The chloroprene polymer is a homopolymer obtained by polymerizing 2-chloro-1,3-butadiene (hereinafter referred to as chloroprene), or a copolymer obtained by polymerizing chloroprene and a monomer which is copolymerizable with chloroprene.

The monomer which is copolymerizable with chloroprene may, for example, be 2,3-dichloro-1,3-butadiene, 1-chloro-1,3-butadiene, butadiene, isoprene, styrene, acrylonitrile, acrylic acid or its ester or methacrylic acid or its ester. It is possible to use two or more of them as the case requires.

The structure of the chloroprene polymer is not particularly limited, and by properly selecting and controlling the polymerization temperature, polymerization initiator, chain transfer agent, polymerization terminator, final polymerization ratio, etc., it is possible to adjust the molecular weight, molecular weight distribution, gel content, molecular terminal structure, crystallization rate, etc.

The emulsifier or dispersant used for emulsion polymerization, is preferably anion-type. It is possible to use the anion-type emulsifier or dispersant together with other emulsifiers or dispersants. By using only those other than the anion-type one, sufficient destabilization may not be attained when a pH adjusting agent is added to form an adhesive, and the initial strength may not be sufficiently developed.

The anion-type emulsifier or dispersant may, for example, be carboxylic acid type or sulfate type. For example, an alkali metal salt of a rosin acid, a C₈₋₂₀ alkyl sulfonate, an alkylaryl sulfate, a condensate of sodium naphthalenesulfonate and formaldehyde, or a sodium alkyldiphenyl ether disulfonate, may be mentioned.

The anion-type emulsifier or dispersant is most preferably a rosin acid, and any one of wood rosin acid, gum rosin acid, tall oil rosin acid and diproportionated rosin acid, may be used.

The emulsion polymerization using the rosin acid is carried out under high alkalinity, so that, in the chloroprene latex, the rosin acid is present in a form of an alkyl metal salt. Therefore, it is possible to use the rosin acid in a form of an alkyl metal resinate.

The amount of the emulsifier or dispersant to be added is preferably from 0.5 to 10 parts by mass, more preferably from 2 to 6 parts by mass, per 100 parts by mass of the total of monomers to be used.

When the rosin acid is used as the emulsifier, it is preferred to use a sulfate type or sulfonate type anion emulsifier or dispersant together, in order to stabilize the chloroprene latex after addition of the pH adjusting agent. In such a case, the amount of the anion emulsifier or dispersant to be added, other than the rosin acid, is preferably from 0.05 to 5 parts by mass, further preferably from 0.1 to 2 parts by mass, per 100 parts by mass of the total of monomers to be used.

The aromatic phosphate ester type plasticizer (B) is one to be added to impart flame retardancy to a coating film obtained by drying the adhesive composition.

Here, the aromatic phosphate ester type plasticizer is a compound formed by a reaction of phosphorus oxychloride with a phenol or a mixture of a phenol with an alcohol. It may, for example, be triphenyl phosphate, tricresyl phosphate, trixylenyl phosphate, cresyl diphenyl phosphate, 2-ethylhexyl diphenyl phosphate, t-butyl phenyl diphenyl phosphate, isopropyl-modified triaryl phosphate product, bis(t-butylphenyl) phenyl phosphate, tris(t-butylphenyl) phosphate, isopropylphenyl diphenyl phosphate, bis(isopropylphenyl) phenyl phosphate or tris(isopropylphenyl) phosphate. It is preferred to use tricresyl phosphate or cresyl diphenyl phosphate, since it is highly effective in improving flame retardancy of the adhesive.

The amount of (B) to be added is preferably in a range of from 0.1 to 20 parts by mass, more preferably from 1 to 15 parts by mass, further preferably from 1 to 10 parts by mass, per 100 parts by mass of the chloroprene polymer or 100 parts by mass of the copolymer of chloroprene and a monomer copolymerizable with chloroprene, from the viewpoint of developing the effect or improving the adhesive properties of an adhesive to be obtained.

The pH adjusting agent (C) is one to be added to adjust the pH of the adhesive composition or adhesive to be in a range of from 7 to 10, for proper destabilization. The adhesive of the present invention develops good initial strength within such a pH range.

Here, the pH adjusting agent is a weak acid or a buffer, and it may, for example, be an amino acid, boric acid, diluted acetic acid, phosphoric acid, citric acid or glutamic acid. It is preferred to use glycine as one type of amino acids, from the viewpoint of cost, adhesion performance or handling efficiency.

The amount of (C) to be added is not particularly limited, but it should be an amount which makes it possible to adjust the pH of the adhesive to be in a range of from 7 to 10. It is more preferred to use an amount which makes it possible to adjust the pH to be in a range of from 8 to 10.

The halogenated alkyl phosphate ester plasticizer (D) is added when it is desired to further improve flame retardancy of the adhesive. In such a case, the amount of (D) to be used is preferably at most 50 mass%, further preferably at most 30 mass%, based on the total of plasticizers to be added, including the aromatic phosphate ester type plasticizer (B). By adjusting it to be in such a range, compatibility with the chloroprene latex will not be deteriorated, whereby it will be possible to prevent separation of the plasticizers or coagulation of the chloroprene latex.

(D) may, for example, be tris(chloroethyl) phosphate, tris(chloropropyl) phosphate, tris(dichloropropyl) phosphate, tris(tribromoneopentyl) phosphate or tetrakis(2-chloroethyl) ethylene diphosphate.

The proportions of the respective components contained in the adhesive composition of the present invention are such that (B) is from 3 to 18 parts by mass, preferably from 3 to 14 parts by mass, and (C) is from 1 to 20 parts by mass, preferably from 1 to 18 parts by mass, per 100 parts by mass of the solid content of (A).

To the adhesive composition of the present invention, it is possible to incorporate a tackifier resin within such a range that the effect of the present invention is not impaired. In such a case, the type of the tackifier resin is not particularly limited, and it may, for example, be a rosin resin, a rosinate resin, a polymerized rosin resin, an α-pinene resin, a β-pinene resin, a terpene phenol resin, a C₅ fraction type petroleum resin, a C₉ fraction type petroleum resin, a C₅/C₉ fraction type petroleum resin, a DCPD type petroleum resin, an alkyl phenol resin, a xylene resin, a coumarone resin or a coumarone-indene resin.

In order to obtain a sufficient initial adhesion power, it is preferred to use resins having a softening point of from 50 to 160°C. Among them, an emulsion of a terpene phenol resin or a rosin acid ester resin, is particularly preferred from the viewpoint of initial strength and water resistance.

The amount of the tackifier resin to be added is preferably at most 10 parts by mass (as dried), per 100 parts by mass of the solid content of a polychloroprene latex, from the viewpoint of maintaining the flame retardancy.

To the adhesive composition of the present invention, it is possible to optionally add e.g. a thickener, a metal oxide, a filler, a film-forming auxiliary agent, an ultraviolet absorber, an antioxidant, a plasticizer, a vulcanizing agent, a vulcanization accelerator, or an antifoam agent, to meet the required performance.

The application of the adhesive of the present invention is not particularly limited. The adhesive is suitably used when bonding various materials such as cement, mortar, slate, cloth, wood material, synthesized rubber material, polyurethane type material, polyvinyl chloride type material or polyolefin type material, and it is particularly suitably used to glue a polyurethane foam type material.

### EXAMPLES

Now, the present invention will be described in further detail with reference to Examples and Comparative Examples, but it should be understood that the present invention is by no means restricted thereto.

In the following description, "parts" and "%" are represented by mass standard, unless otherwise specified.

### EXAMPLE 1

### Polymerization Example 1

By using a reactor having a internal volume of 3 L, 5 parts of disproportionated rosin acid, 0.6 part of sodium hydroxide, 0.5 part of potassium hydroxide, 0.3 part of a sodium salt of formaldehyde/naphthalenesulfonate condensate and 0.3 part of sodium hydrogensulfite, were dissolved in 100 parts of water, in a nitrogen atmosphere. With stirring, 100 parts of a chloroprene monomer and 0.14 part of n-dodecyl mercaptan were further added. Then, in a nitrogen atmosphere, polymerization was carried out at 10°C by using potassium persulfate as an initiator, and when the polymerization ratio became 90%, an emulsion of phenothiazine was added to terminate the polymerization. Heating was carried out under reduced pressure, and an unreacted monomer was removed, followed by concentration to adjust the solid content to be 55%, thereby to obtain a chloroprene latex (CR latex). Preparation of Adhesive

To 100 parts by mass (as wetted) of the obtained chloroprene latex (CR latex), 5 parts by mass of tricresyl phosphate (LINDOL XP PLUS, manufactured by Akzo NOBEL) was added with stirring. Then, 6 parts by mass of glycine was added, followed by thorough stirring to obtain an adhesive.

### Formulation Stability

The formulation stability is the state as observed after the obtained adhesive was left to stand in a gear oven at 40°C for 4 weeks. An adhesive which did not separate or coagulate, and which stayed in the same state as before evaluation of stability without change, was regarded as "good."

### Adhesion Characteristics

The obtained adhesive was applied on the top surface of an urethane foam having a density of 30 kg/m³ (20 mm in thickness x 50 mm in length x 50 mm in width), in an amount of 70 g/m² by a spray. After the prescribed open time, such urethane foams were glued to each other, and after they were left to stand for the prescribed time, the tensile (interfacial peeling) strength was measured.

Here, the tensile strength was measured by using a tensile tester (RTC-1225A, manufactured by ORIENTEC Co., LTD.) by a method in accordance with JIS K6849.

### Storage Stability

The adhesive was put into a glass bottle, and was stored in a gear oven at 40°C, and then a storage stability test was carried out.

### Evaluation of Flame Retardancy

The prepared adhesive was applied on the entire forward end of a flame retardant urethane foam (20 mm in thickness x 100 mm in length x 20 mm in width) having a density of 30 kg/m³, in an amount of about 70 g/m² by a spray. After drying it at room temperature for 5 days, a test of flame retardancy was carried out.

The portion of the specimen coated by the adhesive, was put into a flame of a gas burner, and it was taken out 5 seconds later. The burned state of the specimen after being taken out was evaluated. A case where the fire was extinguished immediately after being taken out of the flame, was designated by ⓞ, a case where the fire was extinguished within 2 seconds after being taken out, was designated by ○, and a case where the fire was extinguished within 5 seconds is designated by Δ. A case where the specimen kept on burning more than 5 seconds, was designated by ×.

### EXAMPLES 2 to 5

Examples 2 to 5 were carried out in the same manner as in the Example 1, except for changing the plasticizer used in the tests to one shown in Table 1.

### COMPARATIVE EXAMPLES 1 to 5

Comparative Examples 1 to 5 were carried out in the same manner as in the Example 1, except for changing the plasticizer used in the tests to one shown in Table 2.

From the results in Table 1, it is evident that the adhesive of the present invention is excellent in initial strength, storage stability and flame retardancy.

**TABLE 1**

| No | | Examples | | | | |
|---|---|---|---|---|---|---|
| | | 1 | 2 | 3 | 4 | 5 |
| Plasticizer | | Lindol XP Plus | CDP | Reofos 65 | CDP/ Fyroll CEF | CDP/ CRP |
| Blend Formulation CR latex (parts by mass) | | 100 | 100 | 100 | 100 | 100 |
| Plasticizer (parts by mass) | | 5 | 5 | 5 | 4/1 | 4/1 |
| Glycine (parts by mass) | | 6 | 6 | 6 | 6 | 6 |
| Formulation stability Evaluation | | Good | Good | Good | Good | Good |
| Adhesive characteristic | | | | | | |
| Open time | Set time | | | | | |
| 10 sec | 5 sec (N/cm²) | 0.7 | 0.7 | 0.4 | 0.5 | 0.6 |
| 1 min | 5 sec (N/cm²) | 1.2 | 1.2 | 1.1 | 1.1 | 1.2 |
| 5 min | 5 sec (N/cm²) | 4.1 | 3.7 | 4.2 | 3.6 | 3.7 |
| 20 min | 5 sec (N/cm²) | 1.8 | 2.2 | 1.9 | 2 | 1.9 |
| 60 min | 5 sec (N/cm²) | 2.7 | 2.4 | 2 | 2 | 2.2 |
| 10 sec | 10 min (N/cm²) | Material failure | Material failure | Material failure | Material failure | Material failure |
| Flame retardancy | | ○ | ○ | ○ | ⓞ | ⓞ |
| Evaluation | | | | | | |
| Storage stability (40°C) | | | | | | |
| After 1 week Appearance | | Good | Good | Good | Good | Good |
| After 2 weeks Appearance | | Good | Good | Good | Good | Good |
| After 3 weeks Appearance | | Good | Good | Good | Good | Good |
| After 4 weeks Appearance | | Good | Good | Good | Good | Good |

In Table 1, Lindol XP Plus represents tricresyl phosphate manufactured by Akzo Nobel; CDP represents cresyl diphenyl phosphate manufactured by DAIHACHI CHEMICAL INDUSTRY Co., LTD; Reofos 65 represents isopropyl-modified triaryl phosphate manufactured by Ajinomoto-Fine-Techno Co., Inc; Fyroll CEF represents tris(chloroethyl) phosphate manufactured by Akzo Nobel; and CRP represents tris(dichloropropyl) phosphate manufactured by DAIHACHI CHEMICAL INDUSTRY Co., LTD.

**TABLE 2**

| No | | Comparative Examples | | | | |
|---|---|---|---|---|---|---|
| | | 1 | 2 | 3 | 4 | 5 |
| Plasticizer | | DBS | Empara 40 | TMP | TMCPP | Fyrol CEF |
| Blend Formulation | | | | | | |
| CR latex (parts by mass) | | 100 | 100 | 100 | 100 | 100 |
| Plasticizer (parts by mass) | | 5 | 5 | 5 | 5 | 5 |
| Glycine (parts by mass) | | 6 | 6 | 6 | 6 | 6 |
| Formulation stability | | | | | | |
| Evaluation | | Good | Good | Separated | Coagulated | Coagulated |
| Adhesive characteristic | | | | No tests carried out | No tests carried out | No tests carried out |
| Open time | Set time | | | | | |
| 10 sec | 5 sec (N/cm²) | 0.7 | 0.4 | | | |
| 1 min | 5 sec (N/cm² ) | 1.3 | 0.7 | | | |
| 5 min | 5 sec (N/cm²) | 3.7 | 3.4 | | | |
| 20 min | 5 sec (N/cm²) | 2.1 | 1.1 | | | |
| 60 min | 5 sec (N/cm²) | 2.2 | 1.9 | | | |
| 10 sec | 10 min (N/cm²) | Material failure | Material failure | | | |
| Flame retardancy | | | | | | |
| Evaluation | | × | Δ | No tests carried out | No tests carried out | No tests carried out |
| Storage stability (40°C) | | | | No tests carried out | No tests carried out | No tests carried out |
| After 1 week Appearance | | Good | Separated | | | |
| After 2 weeks Appearance | | Good | No tests carried out | | | |
| After 3 weeks Appearance | | Good | | | | |
| After 4 weeks Appearance | | Good | | | | |

In Table 2, DBS represents dibutyl sebacate manufactured by TAOKA CHEMICAL Co., LTD.; Empara 40 represents paraffin chloride manufactured by Ajinomoto-Fine-Techno Co., Inc.; TMP represents trimethyl phosphoric acid manufactured by DAIHACHI CHEMICAL INDUSTRY Co., LTD.; TMCPP represents tris(chloropropyl) phosphate manufactured by DAIHACHI CHEMICAL INDUSTRY Co., LTD.; and Fyroll CEF represents tris(chloroethyl) phosphate manufactured by Azko Nobel.

### INDUSTRIAL APPLICABILITY

An adhesive obtained by using the adhesive composition of the present invention, develops sufficient initial strength even in a wet state, and has excellent flame retardancy, whereby it is possible to suitably use it in various fields such as woodworking/building materials, shoemaking and cars. Especially, it is most suitable for use to glue e.g. urethane foam materials, and it exhibits excellent initial strength and flame retardancy.

The entire disclosures of Japanese Patent Application No. 2005-355588 filed on December 9, 2005 and Japanese Patent Application No. 2006-23045 filed on August 18, 2006 including specifications, claims and summaries are incorporated herein by reference in their entireties.

## Claims

1. An adhesive composition comprising a chloroprene latex (A), an aromatic phosphate ester type plasticizer (B), and a pH adjusting agent (C).

2. The adhesive composition according to Claim 1, wherein (A) is one which is emulsion-polymerized in the presence of a rosin acid.

3. The adhesive composition according to Claim 1 or 2, wherein (B) is tricresyl phosphate.

4. The adhesive composition according to Claim 1 or 2, wherein (B) is cresyl diphenyl phosphate.

5. The adhesive composition according to any one of Claims 1 to 4, wherein (C) is glycine.

6. The adhesive composition according to any one of Claims 1 to 5, which further contains a halogenated alkyl phosphate ester plasticizer (D) in an amount of at most 50 mass%, based on the total mass of plasticizers to be added.

7. The adhesive composition according to Claim 6, wherein (D) is tris(chloropropyl) phosphate.

8. The adhesive composition according to Claim 6, wherein (D) is tris(dichloropropyl) phosphate.

9. The adhesive composition according to any one of Claims 1 to 8, which contains from 3 to 18 parts by mass of (B), and from 1 to 20 parts by mass of (C), per 100 parts by mass of the solid content of (A).

10. An adhesive which is **characterized by** using the adhesive composition as defined in any one of Claims 1 to 9.

## Patentansprüche

1. Adhesivzusammensetzung, umfassend einen Chloroprenlatex (A), einen Weichmacher vom aromatischen Phosphatestertyp (B) und ein pHeinstellendes Mittel (C).

2. Die Adhesivzusammensetzung nach Anspruch 1, wobei (A) in Gegenwart einer Harzsäure emulsionspolymerisiert wurde.

3. Die Adhesivzusammensetzung nach Anspruch 1 oder 2, wobei (B) Trikresylphosphat ist.

4. Die Adhesivzusammensetzung nach Anspruch 1 oder 2, wobei (B) Kresyldiphenylphosphat ist.

5. Die Adhesivzusammensetzung nach einem der Ansprüche 1 bis 4, wobei (C) Glycin ist.

6. Die Adhesivzusammensetzung nach einem der Ansprüche 1 bis 5, die weiterhin einen Weichmacher vom halogenierten Alkylphosphatestertyp in einer Menge von höchstens Masse%, bezogen auf die Gesamtmasse an Weichmachern, die zugegeben wurden, enthält.

7. Die Adhesivzusammensetzung nach Anspruch 6, wobei (D) ein Tris(chlorpropyl)phosphat ist.

8. Die Adhesivzusammensetzung nach Anspruch 6, wobei (D) Tris(dichlorpropyl)phosphat ist.

9. Die Adhesivzusammensetzung nach einem der Ansprüche 1 bis 8, die 3 bis 18 Masseteile (B) und 1 bis 20 Masseteile (C), pro 100 Masseteilen an Feststoffgehalt von (A) enthält.

10. Adhesiv, das **gekennzeichnet ist durch** die Verwendung einer Adhesivzusammensetzung, wie sie in einem der Ansprüche 1 bis 9 definiert wird.

## Revendications

1. Composition adhésive comprenant un latex de chloroprène (A), un plastifiant de type ester phosphate aromatique (B), et un agent d'ajustement du pH (C).

2. Composition adhésive selon la revendication 1, dans laquelle le latex (A) est un latex qui est polymérisé en émulsion en présence d'un acide résinique.

3. Composition adhésive selon la revendication 1 ou 2, dans laquelle (B) est le phosphate de tricrésyle.

4. Composition adhésive selon la revendication 1 ou 2, dans laquelle (B) est le diphénylphosphate de crésyle.

5. Composition adhésive selon l'une quelconque des revendications 1 à 4, dans laquelle (C) est la glycine.

6. Composition adhésive selon l'une quelconque des revendications 1 à 5, qui contient en outre un plastifiant ester alkylphosphate halogéné (D) en une quantité d'au plus 50 % en masse par rapport à la masse totale des plastifiants à ajouter.

7. Composition adhésive selon la revendication 6, dans laquelle (D) est le phosphate de tris(chloropropyle).

8. Composition adhésive selon la revendication 6, dans laquelle (D) est le phosphate de tris(dichloropropyle).

9. Composition adhésive selon l'une quelconque des revendications 1 à 8, qui contient de 3 à 18 parties en masse de (B) et de 1 à 20 parties en masse de (C), pour 100 parties en masse de la teneur en extrait sec de (A).

10. Adhésif qui est **caractérisé par** l'utilisation de la composition adhésive telle que définie dans l'une quelconque des revendications 1 à 9.
